**Europäisches Patentamt**

**European Patent Office**

**Office européen des brevets**

(19)

(11) Numéro de publication: **0 198 768**
**B1**

(12) # FASCICULE DE BREVET EUROPEEN

(45) Date de publication du fascicule du brevet:
03.08.88

(51) Int. Cl.⁴: **B 08 B 7/02**

(21) Numéro de dépôt: **86400753.9**

(22) Date de dépôt: **08.04.86**

(54) Machine d'ébavurage de brames.

(30) Priorité: **12.04.85 FR 8505553**

(43) Date de publication de la demande:
**22.10.86 Bulletin 86/43**

(45) Mention de la délivrance du brevet:
**03.08.88 Bulletin 88/31**

(84) Etats contractants désignés:
**AT BE CH DE FR GB IT LI LU NL SE**

(56) Documents cités:
**US - A - 1 328 034**

**REVUE DE METALLURGIE-CIT, juin 1983, page 490,
Paris, FR; "Information des machines de coulée"**

(73) Titulaire: **USINOR ACIERS, La Défense 9 4 place de la
Pyramide, F-92800 Puteaux (FR)**

(72) Inventeur: **Delbecq, Gérard, 5 rue Jules Valles,
F-59760 Grande Synthe (FR)**
Inventeur: **Markey, Jean-Pierre, 3, route de Sox,
F-59380 Quaedypre (FR)**
Inventeur: **Marcq, Bernard, 27 Digue de Mer,
F-59240 Dunkerque Malo Les Bains (FR)**
Inventeur: **Val, René, 26 rue Victor Hugo,
F-59760 Grande-Synthe (FR)**

(74) Mandataire: **Bressand, Georges et al, c/o CABINET
LAVOIX 2 Place d'Estienne d'Orves, F-75441 Paris
Cedex 09 (FR)**

ACTORUM AG

## Description

La présente invention est relative à une machine d'ébavurage pour des brames de coulée continue mises à longueur par oxycoupage, selon le préambule de la revendication 1.

Dans la coulée continue d'acier, on obtient un produit se présentant sous forme d'une bande d'acier épaisse qu'il est nécessaire de couper à des longueurs déterminées afin d'obtenir des brames que l'on traite ensuite dans des opérations ultérieures de laminage.

Le produit issu de l'installation de coulée continue est transformé en brames par oxycoupage à l'aide d'un chalumeau qui projette son jet perpendiculairement à la surface de la bande et provoque sur la face opposée à celle recevant le jet du chalumeau, des bavures d'acier en fusion. Ces bavures constituées de résidus d'oxycoupage se forment en raison de la perturbation de l'évacuation des résidus de coupe engendrée par la détente des gaz résiduels à la sortie de la fente de découpage. L'effet de ce phénomène est de provoquer un collage des résidus non évacués sur chaque bord d'extrémité de la face inférieure de la brame.

Afin d'éliminer ces bavures, le brevet FR. 2 467 041 propose une machine comportant un ensemble de lames tranchantes portées par un chariot dont la translation suivant l'axe longitudinal de la brame sous la face inférieure de cette dernière, et après mise en contact de leur tranchant avec cette face, sectionne les résidus d'oxycoupage. Cette machine nécessite un arrêt de la brame sur la table à rouleaux pour l'opération d'ébavurage et de plus il convient de prévoir deux machines symétriques opposées, en regard de la même face de la brame, respectivement pour éliminer les bavures en tête et en pied de la brame.

Un tel arrêt de la brame constitue une opération extrêmement préjudiciable à la productivité de l'installation et la présence de deux machines augmente sensiblement son coût.

On connaît par ailleurs des dispositifs rotatifs tels que décrits dans les brevets US-A-1 984 762 ou GB-A-736 381 qui visent d'une façon générale le nettoyage de surfaces métalliques et autres, mais dont les moyens d'élimination des particules indésirables telles que calamine et autres aspérités ne sont pas adaptés au problème spécifique d'élimination des bavures d'oxycoupage en tête et en pied de brame.

Enfin, le document «Revue de la Métallurgie», juin 1983, page 490, décrit de façon sommaire un dispositif d'ébavurage de brames comprenant un rouleau doté de marteaux articulés et dont le sens de rotation peut être inversé.

La présente invention vise à fournir une machine permettant d'éliminer ces bavures qui se forment sur les bords inférieurs des faces d'extrémité des brames et sont préjudiciables aux opérations ultérieures de laminage, une telle machine devant de plus remédieur aux inconvénients des installations connues.

L'invention a ainsi pour objet une machine d'ébavurage pour des brames ou autres produits issus d'une installation de coulée continue et mis à longueur par oxycoupage, du type comprenant un rotor monté horizontalement dans un bâti et portant à sa périphérie des marteaux articulés d'elimination des bavures, le rotor étant entraîné par un arbre moteur dont le sens de rotation peut être inversé, caractérisé en ce que les marteaux sont autoescamontables et ont une tête qui décrit une enveloppe qui est rendue sensiblement tangente à la face inférieure de la brame par des moyens de translation verticale du rotor portés par le bâti, la rotation de l'arbre moteur du rotor dans un sens ou en sens opposé étant déterminée par un dispositif de commande en fonction de la détection du passage de la tête ou du pied de la brame.

Les marteaux ecsamotables se présentent chacun sous forme d'une masse allongée dont l'une des extrémités contituant la tête est en forme de queue d'aronde et qui comporte au voisinage de son autre extrémité un alésage de plus grand diamètre que le diamètre d'une broche d'articulation sur laquelle ledit marteau est monté fou, de sorte que l'on obtient ainsi, outre une possibilité d'effacement angulaire, un jeu radial absorbant les variations de la hauteur de la brame par rapport à l'axe du rotor.

Selon une autre caractéristique, le rotor comprend un moyeu sur lequel sont fixées de joues palières régulièrement espacées dans la direction de l'axe longitudinal de l'arbre, les joues palières recevant un ensemble de broches d'articulation parallèles à l'axe de l'arbre, qui portent les marteaux et sont situées à égale distance de cet axe et régulièrement espacées à la périphérie des joues palières, les tourillons d'extrémité du moyeu étant reçus dans des paliers portés par des empoises mobiles en translation verticale dans le bâti.

La machine d'ébavurage suivant l'invention est placée sous la face inférieure principale de la brame, dont les bords d'extrémité de tête et de pied sont ourlés d'une bavure, l'axe du rotor étant disposé parallèlement à la face de la brame et à une distance telle que les têtes des marteaux entraînés sous l'effet de la force centrifuge décrivent une enveloppe circulaire tangentielle à la face inférieure de la brame et arrachent ainsi la bavure qui est en saillie sur cette face au niveau du bord.

Afin de diminuer les efforts d'arrachement de la bavure, on peut disposer l'axe du rotor de telle sorte qu'il fasse un angle relativement faible avec la face d'extrémité de la brame, ce qui permet d'attaquer progressivement la bavure à mesure de l'avancement de la brame.

Une caractéristique essentielle de l'invention réside dans l'inversion du sens de rotation du rotor entre la tête et le pied de brame, c'est-à-dire l'extrémité avant et l'extrémité arrière de cette dernière dans le sens de progression de la brame sur la table à rouleaux. En effet, il est optimal pour l'élimination des bavures que le rotor tourne dans le sens des aiguilles d'une montre pour arracher les bavures de tête de brame lorsque cette dernière circule de gauche à droite au-dessus du rotor et que ce sens de rotation soit inversé pour éliminer ensuite les bavures de pied de brame. Or, cette caractéristique de fonctionnement est rendue possible par la forme de la tête des marteaux et leur montage sur le rotor.

La commande du sens de rotation du rotor est réalisée à partir de cellules à infrarouge ou autres moyens équivalents qui détectent le passage et la présence de la brame chaude.

L'invention est exposée ci-après plus en détail à l'aide des dessins annexés qui en représentent seulement un mode de réalisation.

Sur ces dessins:

— la fig. 1 est une vue schématique en coupe suivant l'axe longitudinal de la brame illustrant le principe de fonctionnement de la machine;

— la fig. 2 est une vue en élévation et en coupe suivant la ligne 2-2 de la fig. 4 de la machine à ébavurer;

— la fig. 3 est une vue latérale en coupe suivant la ligne 3-3 de la fig. 2;

— la fig. 4 est une vue de dessus sans son capot de protection de la machine de la fig. 2;

— la fig. 5 est une vue partielle en élévation des marteaux autoescamotables disposés à la périphérie du rotor, l'un de ces marteaux étant représenté en coupe; et,

— la fig. 6 est une vue à plus grande échelle en élévation et coupe partielle d'une colonne du bâti de la fig. 3.

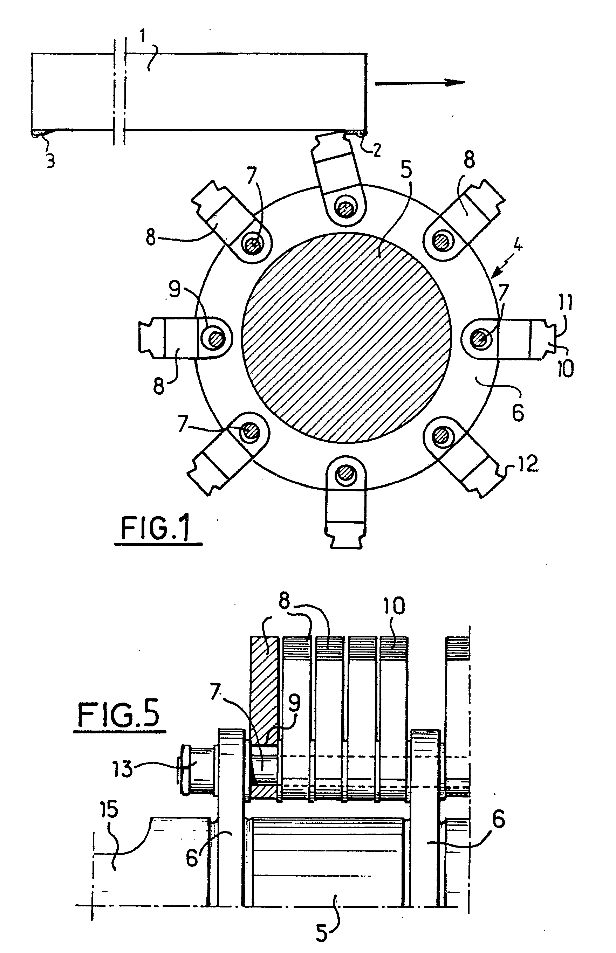

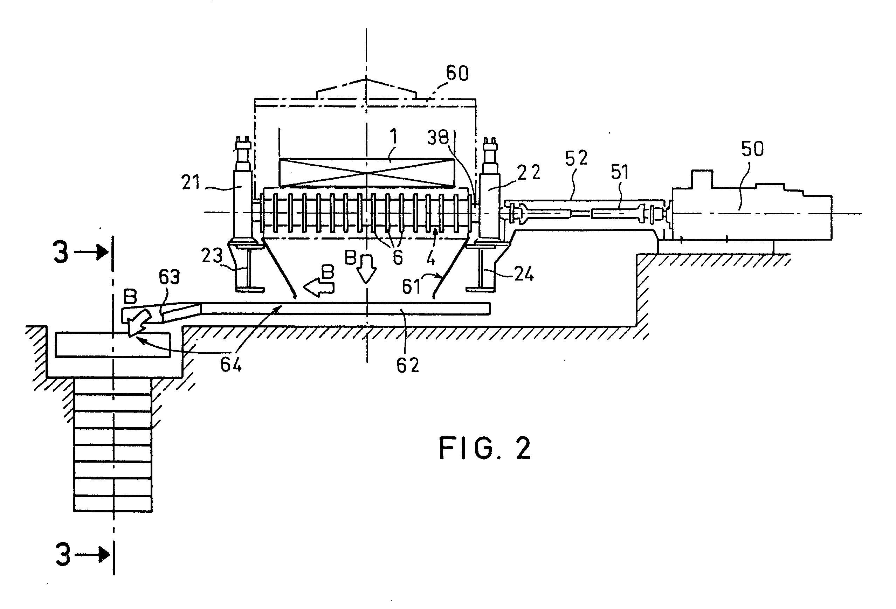

Sur la fig. 1 une brame 1 préalablement mise à longueur par oxycoupage dans un poste non représenté situé en amont du sens déplacement de la brame indiqué par la fléche, comporte le long des bords d'extrémité de sa face inférieure des bavures 2 et 3 indésirables. La machine à ébavurer, est représentée schématiquement, sous la face inférieure de la brame, par son rotor 4 qui comprend un moyeu 5 sur lequel sont fixées des joues palières 6 régulièrement espacées dans la direction de l'axe longitudinal du moyeu 5, ainsi que cela apparaît sur la fig. 2. Les joues palières 6 reçoivent un ensemble de broches d'articulation 7 disposées à égale distance de l'axe du moyeu 5 et régulièrement réparties sur la périphérie des joues palières. Sur le mode de réalisation représenté, huit broches sont ainsi disposées sur les joues palières, mais il est évident que l'on peut en faire varier le nombre.

Des marteaux 8 sont montés fous sur les broches d'articulation 7. Ces marteaux se présentent sous la forme d'une pièce allongée dont l'une des extrémités est percée d'un alésage 9 de plus grand diamètre que le diamètre des broches 7, réalisant ainsi un jeu radial entre ces deux éléments.

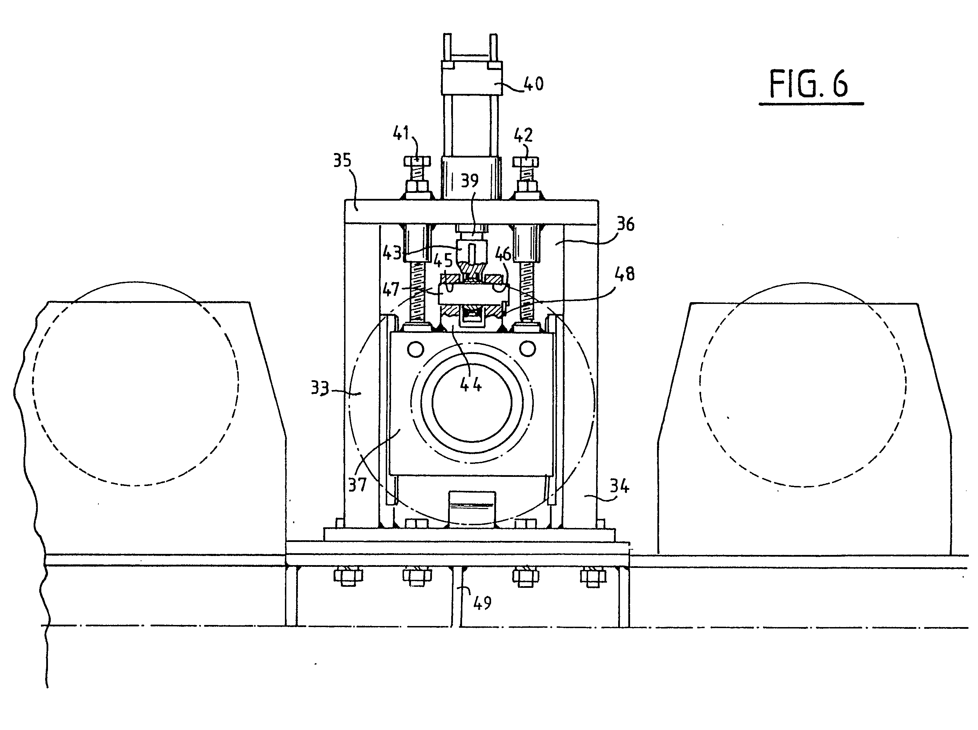

Sur la fig. 5 représentant un détail du montage des marteaux 8 entre deux joues palières 6, on constate qu'un groupe de marteaux 8 est monté sur une broche commune 7 traversant toutes les joues palières parallèlement à une génératrice du moyeu 5.

Sur le mode de réalisation représenté, tous les marteaux 8 de chaque groupe sont identiques, mais il est possible, selon une variante, de prévoir pour chaque marteau adjacent à une joue palière, une partie faisant saillie au-dessus de la joue palière, de sorte que l'ensemble des têtes 10 des marteaux couvre une génératrice complète sur la longueur de la machine.

Les têtes 10 des marteaux ont une forme en queue d'aronde afin de comporter deux arêtes 11 et 12 symétriques qui peuvent être utilisées dans un sens de rotation de l'arbre ou dans l'autre.

Les broches 7 traversant l'ensemble des joues palières sont retenues de part et d'autre des joues palières d'extrémité par des écrous 13 ou par d'autres dispositifs.

Les marteaux autoescamotables sont entraînés par le moyeu 5 et sous l'effet de la force centrifuge prennent une position radiale la plus éloignée de l'axe du moyeu 5. La position de l'axe du moyeu 5 par rapport à la face inférieure de la brame est réglée de façon telle que lors de la rotation, l'enveloppe des arêtes 11, 12 des têtes 9 soit sensiblement tangente à la surface inférieure de la brame et sécante à la bavure. Le choc de l'une des arêtes 11 ou 12 de la tête 10 du marteau sur la bavure fournit l'énergie nécessaire à l'arrachement de celle-ci. Sous l'effet du choc le marteau 8 s'escamote angulairement comme indiqué, si son énergie n'a pas été suffisante pour arracher la bavure lors d'une première passe, et le marteau suivant vient frapper le reste de la bavure jusqu'à élimination totale de cette dernière. On règle ainsi en fonction de la vitesse de déplacement de la brame 1, la vitesse de rotation du moyeu 5 pour obtenir une élimination totale de la bavure par les chocs successifs des marteaux sur cette dernière.

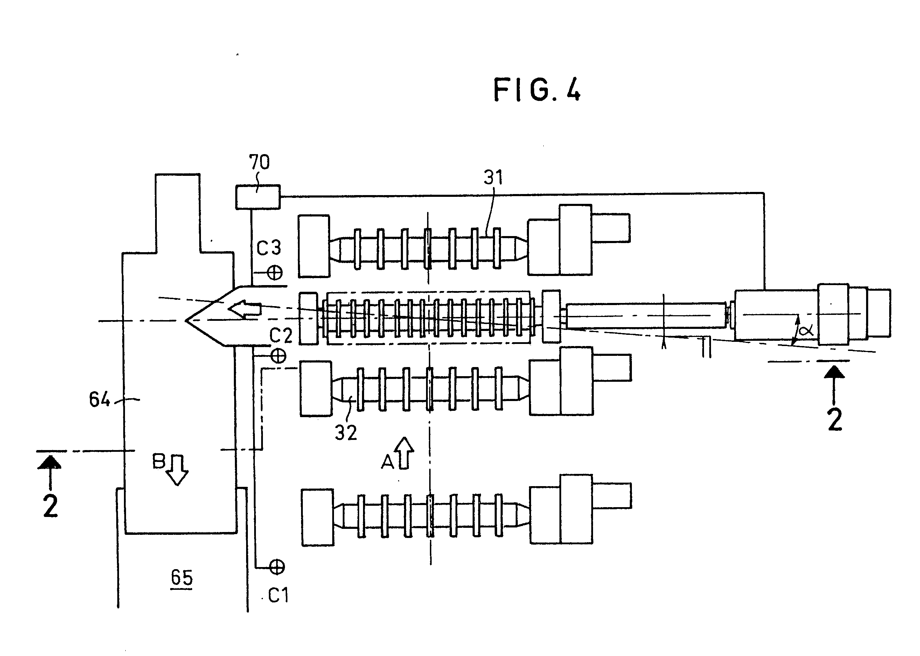

Le nombre de broches d'articulation 7 supportant les marteaux est déterminé par la vitesse de rotation de l'arbre, la vitesse de déplacement de la brame et le nombre d'impacts sur la bavure nécessaires pour assurer son arrachement lors de son passage au-dessus de la machine d'ébavurage. Afin de diminuer l'énergie nécessaire à l'élimination de la bavure, on peut disposer le rotor 4 sous la brame 1 de telle sorte que son axe longitudinal fasse un angle $\alpha < 10°$, illustré à la fig. 4, par rapport à la normale à l'axe longitudinal de la brame 1. De cette façon, chaque groupe de marteaux attaque progressivement la bavure et l'énergie nécessaire lors de l'impact avec cette dernière est beaucoup plus faible, réduisant ainsi le choc total supporté par les broches d'articulation. C'est pour cette même raison, que les marteaux se présentent sous forme d'une masse allongée relativement étroite afin de diminuer l'énergie du choc qu'ils subissent individuellement et qui est répercutée sur la broche 7.

Le rotor 4 représenté à la fig. 2 en position sous une brame 1 est monté horizontalement dans un bâti constitué de deux colonnes 21, 22 verticales reposant sur des poutres 23, 24 supportant elles-mêmes les rouleaux adjacents 31, 32 d'évacuation des brames.

Les colonnes 21, 22 identiques, sont constituées de deux montants 33, 34 reliés à leur sommet par un chapiteau 35 et délimitant entre eux une fenêtre 36 dans laquelle coulisse une empoise 37 portant le palier recevant le tourillon 38 du rotor 4. Cette empoise 37 est solidaire en translation de la tige mobile 39 d'un vérin 40 monté sur le chapiteau 35 qui permet un déplacement dans une direction verticale du rotor 4.

· Ce chapiteau 35 est en outre muni de deux butées à vis réglables 41, 42 qui permettent d'ajuster la distance séparant l'axe du rotor de la face inférieure de la brame.

L'empoise 37 est rendu solidaire en translation de la tige 39 du vérin par un embout à rotule 43 fixé à la tige du vérin et dont la rotule est logée dans une chape 44 munie de deux orifices 45, 46 en coïncidence, dans lesquels est enfilé un axe 47 traversant la rotule de l'embout 43 et fixé à la chape 44 par une plaque d'arrêt 48. En position de repos du rotor, l'empoise 37 vient reposer sur la butée 49.

Le rotor 4 est entraîné en rotation par un moteur électrique 50 qui lui est accouplé à l'aide d'une transmission à cardan 51 protégée par une gouttière 52. Comme précédemment indiqué et représenté sur la fig. 4, l'axe du rotor peut être incliné d'un angle α par rapport à la normale à l'axe longitudinal de la table d'évacuation des brames afin de diminuer le couple nécessaire à l'élimination de ces bavures qui sont attaquées progressivement par une même génératrice de marteaux du rotor à mesure de l'avancement de la brame 1.

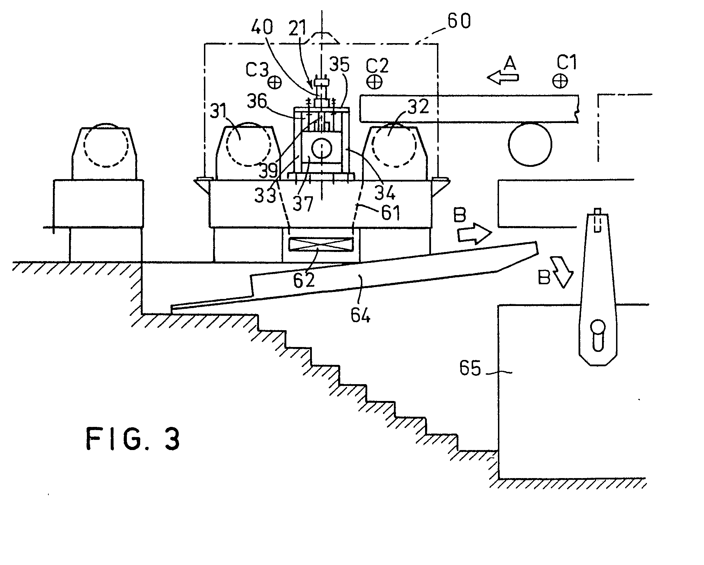

La mise en route du moteur 50, la levée du rotor 4 par coulissement vertical des empoises 37 dans le bâti sous l'action des vérins 40, ainsi que la descente et l'inversion du sens de rotation du moteur 50 sont commandées par un dispositif 70 connecté à des capteurs tels que des cellules à infrarouge C1, C2 et C3 placées comme indiqué sur les fig. 3 et 4, latéralement et au-dessus des brames dont elles détectent le passage. Les cellules C1 et C2 sont placées en amont du rotor 4 et la cellule C3 est placée immédiatement en aval, bien que d'autre dispositions puissent être envisagées pour affiner la précision de la détection de position de la brame. Un circuit logique commande en fonction de la présence ou de l'absence de la brame en regard de chacun des capteurs C1, C2 et C3 les phases de l'opération d'ébavurage qui se déroule de la façon suivante: avant l'arrivée de la tête de brame, circulant de droite à gauche comme indiqué par la flèche A, le rotor est mis en rotation en sens contraire des aiguilles d'une montre vu sur la fig. 3, lors du passage de la brame au droit de la cellule C1, puis le rotor est monté en position tangentielle à la face inférieure de la brame lorsque la tête de cette dernière arrive au droit de la cellule C2. Lorsque la tête de brame arrive à la cellule C3, le rotor est abaissé et arrêté. Après détection du passage du pied de brame en C1, le rotor est mis en rotation en sens inverse par rapport à la tête de brame, puis la détection par C2 du passage du pied de brame provoque la montée du rotor en position d'ébavurage et la détection du passage du pied de brame en C3 détermine la fin du cycle d'ébavurage d'une brame.

Les bavures arrachées par les marteaux sont récupérées par un capot protecteur 60 englobant également les rouleaux adjacents 31 et 32 et tombent dans une trémie 61 puis sur une bande transporteuse 62 dont l'axe longitudinal coïncide en projection avec celui du rotor 4. Les bavures sont ensuite déversées par un déversoir 63 sur une autre bande transporteuse 64 et enfin stockées dans une benne 65 pour évacuation. Le sens de cheminement des bavures est illustré par les flèches B.

## Revendications

1. Machine d'ébavurage pour des brames (1) ou autres produits issus d'une installation de coulée continue et mis à longueur par oxycoupage, du type comprenant un rotor (4) monté horizontalement dans un bâti et portant à sa périphérie des marteaux articulés (8) d'élimination des bavures, le rotor (4) étant entraîné par un arbre moteur (51) dont le sens de rotation peut être inversé, caractérisée en ce que les marteaux (8) sont autoescamotables et ont une tête (10) qui décrit une enveloppe qui est rendue sensiblement tangente à la face inférieure de la brame (1) par des moyens (40, 36) de transation verticale du rotor (4) portés par le bâti (21, 22), la rotation de l'arbre moteur (51) dans un sens ou en sens opposé étant déterminée par un dispositif de commande en fonction de la détection (en C1, C2, C3) du passage de la tête ou du pied de la brame.

2. Machine suivant la revendication 1, caractérisée en ce que le rotor comprend un moyeu (5) sur lequel sont fixées des joues palières (6) régulièrement espacées dans la direction de l'axe longitudinal de l'arbre, les joues palières (6) recevant un ensemble de broches d'articulation (7) parallèles à l'axe de l'arbre, qui portent les marteaux et sont situées à égale distance de cet axe et régulièrement espacées à la périphérie des joues palières (6), les tourillons d'extrémité (38) du moyeu (5) étant reçus dans des paliers portés par des empoises (37) mobiles en translation verticale dans le bâti (21; 22).

3. Machine selon la revendication 1 ou 2, caractérisée en ce que les marteaux (8) escamotables se présentent chacun sous la forme d'une masse allongée dont l'une des extrémités constituant la tête (10) est en forme de queue d'aronde et qui comporte au voisinage de son autre extrémité un alésage (9) de plus grand diamètre que le diamètre de la broche (7) d'articulation sur laquelle elle est montée libre.

4. Machine selon l'une quelconque des revendications précédentes, caractérisée en ce que le bâti est constitué de deux colonnes (21 et 22) disposées à chaque extrémité du rotor (4), munie chacune d'une fenêtre (36) dans lesquelles coulissent les empoises (37) sous l'action de deux vérins (40) fixés à la partie supérieure des colonnes (21 et 22) au-dessus des fenêtres (36).

5. Machine selon la revendication 4, caractérisée en ce que l'empoise (37) est rendue solidaire en translation de la tige mobile (39) du vérin (40) par un embout à rotule dont la rotule est traversée par un axe (47) monté dans une chape (44) fixée à la partie supérieure de l'empoise.

6. Machine selon l'une des revendications précédentes caractérisée en ce que le rotor (4) est entraîné en rotation par un moteur (50) dont le sens de rotation est commandé par un dispositif de commande (70) connecté à des capteurs (C1, C2, C3) disposés respectivement en amont (C1, C2) et en aval (C3) du rotor.

7. Machine selon la revendication 6, caractérisée en ce que le dispositif de commande (70) commande simultanément et en synchronisme les vérins (40).

8. Machine selon la revendication 7 ou 8, caractérisée en ce que les capteurs sont des cellules à infrarouge.

9. Machine selon l'une quelconque des revendications précédentes, caractérisée en ce que l'axe du rotor (4) est incliné d'un angle inférieur à 10° par rapport à la normale à l'axe longitudinal de la brame.

10. Machine selon l'une quelconque des revendicatins précédentes, caractérisée en ce que le rotor (4) est coiffé d'un capot protecteur (60) et il est prévu une trémie (61) de récupération des bavures, disposée sous le rotor et qui évacue ces dernières vers un récipient de stockage (65), par des bandes transporteuses (62, 64).

11. Machine selon l'une quelconque des revendications précédentes, caractérisée en ce que chaque marteau (8) adjacent à une joue palière (6) comporte une partie faisant saillie au-dessus de la joue palière.

**Patentansprüche**

1. Entgratungsmaschine für Brammen (1) oder andere aus einer Stranggiesseinrichtung hervorgegangene und durch Brennschneiden abgelängte Produkte, mit einem horizontal in einem Gestell angebrachten und an seinem Umfang angelenkte Hämmer (8) zur Beseitigung von Graten tragenden Rotor (4), wobei der Rotor (4) durch eine Antriebswelle (51) angetrieben wird, deren Drehsinn umgekehrt werden kann, dadurch gekennzeichnet, dass die Hämmer (8) selbsteinziehend sind und einen Kopf (10) aufweisen, welcher eine Einhüllende beschreibt, die durch auf dem Gestell (21, 22) sitzende Mittel (40, 36) zur Vertikalversetzung des Rotors (4) die Unterseite der Bramme (1) im wesentlichen berührend gemacht ist, wobei die Drehung der Antriebswelle (51) im einen Sinne oder im entgegengesetzten Sinne durch eine Steuervorrichtung in Abhängigkeit von der Feststellung (in C1, C2, C3) des Durchganges des Kopfes oder des Fusses der Bramme bestimmt wird.

2. Maschine nach Anspruch 1, dadurch gekennzeichnet, dass der Rotor eine Nabe (5) umfasst, auf welcher in Richtung der Längsachse der Welle in regelmässigem Abstand liegend Lagerwangen (6) angebracht sind, wobei die Lagerwangen (6) einen Satz von zur Achse der Welle parallelen Gelenkspindeln (7) aufnehmen, welche die Hämmer tragen und in gleichem Abstand von dieser Achse liegen und am Umfang der Lagerwangen (6) in regelmässigem Abstand angeordnet sind, wobei die Endzapfen (38) der Nabe (5) in Lagern aufgenommen sind, welche von im Gestell (21; 22) vertikal beweglichen Einbaustücken (37) getragen werden.

3. Maschine nach Anspruch 1 oder 2, dadurch gekennzeichnet, dass die einziehenden Hämmer (8) sich jeweils in Form einer langgestreckten Masse darstellen, deren den Kopf (10) bildendes eines Ende die Form eines Schwalbenschwanzes hat und die im Bereich ihres anderen Endes eine Bohrung (9) mit grösserem Durchmesser als dem Durchmesser der Gelenkspindel (7), auf welcher sie frei angebracht ist, aufweist.

4. Maschine nach irgendeinem der vorstehenden Ansprüche, dadurch gekennzeichnet, dass das Gestell aus zwei an jedem Ende des Rotors (4) angeordneten Säulen (21 und 22) gebildet ist, in welchen die Einbaustücke (37) unter der Wirkung von zwei Winden (40) gleiten, die im oberen Teil der Säulen (21 und 22) über den Fenstern (36) angebracht sind.

5. Maschine nach Anspruch 4, dadurch gekennzeichnet, dass das Einbaustück (37) verschiebfest mit der beweglichen Stange (39) der Winde (40) durch eine Gelenkkopfstange verbunden ist, deren Gelenkkopf von einer Achse (47) durchsetzt wird, die in einem im oberen Teil des Einbaustücks befestigten Gabelkopf (44) angebracht ist.

6. Maschine nach irgendeinem der vorstehenden Ansprüche, dadurch gekennzeichnet, dass der Rotor (4) durch einen Motor (50) drehend angetrieben wird, dessen Drehsinn durch eine Steuervorrichtung (70) gesteuert wird, welche mit Fühlern (C1, C2, C3) verbunden ist, die vor (C1, C2) bzw. nach (C3) dem Rotor angeordnet sind.

7. Maschine nach Anspruch 6, dadurch gekennzeichnet, dass die Steuervorrichtung (70) gleichzeitig und im Gleichtakt die Winden (40) steuert.

8. Maschine nach Anspruch 7 oder 8, dadurch gekennzeichnet, dass die Fühler Infrarotzellen sind.

9. Maschine nach irgendeinem der vorstehenden Ansprüche, dadurch gekennzeichnet, dass die Achse des Rotors (4) in einem Winkel von weniger als 10° in Bezug auf die Normale zur Längsachse der Bramme geneigt ist.

10. Maschine nach irgendeinem der vorstehenden Ansprüche, dadurch gekennzeichnet, dass der Rotor (4) mit einer Schutzhaube (60) abgedeckt ist, und dass ein Trichter (61) zur Rückgewinnung der Grate vorgesehen ist, welcher unter dem Rotor angeordnet ist und letztere über Transportbänder (62, 64) zu einem Speicherbehälter (65) abführt.

11. Maschine nach irgendeinem der vorstehenden Ansprüche, dadurch gekennzeichnet, dass jeder zu einer Lagerwange (6) benachbarte Hammer (8) einen über die Lagerwange vorspringenden Abschnitt aufweist.

**Claims**

1. A deburring machine for slabs (1) or other products issuing from a continuous casting plant and cut to length by oxygen cutting, of the kind comprising a rotor (4) horizontally mounted in a frame and having at its periphery articulated burr-removing hammers (8), the rotor (4) being driven by a drive shaft (51) the direction of rotation of which can be reversed, characterised in that the hammers (8) are self-retractable and have a head (10) which describes an envelope which is made substantially tangent to the lower surface of the slab (1) by vertical translation means (40, 36) of the rotor (4) carried by the frame (21, 22), the rotation of the drive shaft (51) in one direction or in the opposite direction being determined by a control device as a function of the detection (at C1, C2, C3) of the passage of the head end or foot end of the slab.

2. A machine according to claim 1, characterised in that the rotor comprises a hub (5) on which are fixed bearing flanges (6) evenly spaced apart along the longitudinal axis of the shaft, the bearing flanges (6) receiving a group of pivot pins (7) parallel to the axis of the shaft, which carry the hammers and are evenly spaced apart around the periphery of the bearing flanges (6), the end journals (38) of the hub (5) being received in bearings carried by bearing blocks (37) which are movable in vertical translation in the frame (21; 22).

3. A machine according to claim 1 or 2, characterised in that the retractable hammers (8) each have an elongated shape of which one end constituting the head (10) has a dove-tail shape and which comprises in the region of its other end a bore (9) having a diameter larger than the diameter of the pivot pin (7) on which it is freely mounted.

4. A machine according to any of the preceding claims, characterised in that the frame comprises two columns (21 and 22) which are disposed at each end of the rotor (4) and are each provided with an opening (36) in which the bearing blocks (37) are slidable under the effect of two jacks (40) mounted on an upper part of the columns (21 and 22) above the openings (36).

5. A machine according to claim 4, characterised in that the bearing block (37) is integral in translation with the movable rod (39) of the jack (40) via a swivel-joint connector, the swivel joint being traversed by a spindle (47) mounted in a yoke (44) fixed to the upper part of the bearing block.

6. A maching according to one of the preceding claims, characterised in that the rotor (4) is rotatively driven by a motor (50) the direction of rotation of which is controlled by a control device (70) connected to sensors (C1, C2, C3) respectively located at positions upstream (C1, C2) of and downstream (C3) of the rotor.

7. A machine according to claim 6, characterised in that the control device (70) controls the jacks (40) simultaneously and in synchronism.

8. A machine according to claim 7 or 8, characterised in that the sensors are infrared cells.

9. A machine according to any one of the preceding claims, characterised in that the axis of the rotor (4) is inclined at an angle of less than 10° with respect to a perpendicular to the longitudinal axis of the slab.

10. A machine according to any of the preceding claims, characterised in that the rotor (4) is surmounted by a protective hood (60) and a burr-recovering hopper (61) is provided under the rotor for discharging the burrs into a storage container (65) via conveyor belts (62, 64).

11. A machine according to any one of the preceding claims, characterised in that each hammer (8) adjacent to a bearing flange (6) comprises a portion which projects above the bearing flange.

FIG.1

FIG.5

FIG. 2

FIG. 3

FIG. 4

FIG. 6